# EUROPÄISCHE PATENTSCHRIFT

(11) **EP 0 797 328 B1**
(45) Veröffentlichungstag und Bekanntmachung des Hinweises auf die Patenterteilung: **27.04.2005**
(21) Anmeldenummer: 97102781.8
(22) Anmeldetag: 20.02.1997
(51) Int. Cl.: H04L 7/04, E05B 49/00

(54) **Verfahren zum Empfang eines drahtlos übertragenen Bitmusters**
Method for receiving a wireless transmitted bit pattern
Procédé pour recevoir une configuration de bits transmis sans fil

(30) Priorität: 23.03.1996 DE 19611577
(43) Veröffentlichungstag der Anmeldung: 24.09.1997
(73) Patentinhaber: Bayerische Motoren Werke Aktiengesellschaft, 80788 München (DE)
(72) Erfinder: Bartz, Rüdiger, 82256 Fürstenfeldbruck (DE); Vollrath, Eckart, 80803 München (DE)

(56) Entgegenhaltungen:
- US-A- 3 801 956
- US-A- 3 864 583
- US-A- 3 939 304
- US-A- 5 448 571

## Beschreibung

Die Erfindung bezieht sich auf ein Verfahren mit den Merkmalen des Oberbegriffs von Patentanspruch 1.

Ein derartiges Verfahren ist im Rahmen von Fernbedienungen allgemein bekannt. Die Fernbedienung arbeitet auf Funk- oder Infrarot-Basis. Das Synchronisationsbyte wird aufgrund der ersten Anstiegsflanke bestimmt. Kommt es während des Empfangs dieser Flanke zu einer Störung, so kann das Synchronisationsbyte nicht bestimmt und damit auch das Codesignal nicht ausgewertet werden. Die Folge davon ist die Notwendigkeit, das Befehlssignal mehrfach auszugeben. Dies ist mit einem Komfortverlust verbunden. Auch dann, wenn während der Übertragung des Synchronisationsbytes eine Störung auftritt, besteht die Gefahr eines Informationsverlustes, da beispielsweise ein Störimpuls als logische "1" ausgewertet und damit dem Synchronisationsbyte ein falscher Gesamt-Informationsgehalt beigemessen wird.

Der Erfindung liegt die Aufgabe zugrunde, ein Verfahren der eingangs genannten Art zu schaffen, das mit geringem Aufwand eine fehlerfreie Erkennung des Synchronisationsbytes und damit eine Auswertung der gesamten übertragenen Information mit geringem Aufwand ermöglicht.

Die Erfindung löst diese Aufgabe durch die kennzeichnenden Merkmale des Patentanspruchs 1.

US-A-5 448 571 beschveibt ein Verfahren welches ein Trainingsmuster, das vor dem Synchronisationsbyte übertragen wird, zur Synchronisation heranzicht.

Das Hauptgewicht der Erfindung besteht in der Erkennung des Synchronisationsbytes und der auch bei Störung ausgeführten richtigen Entschlüsselung seines Inhalts. Das hierzu verwendete Korrelationsverfahren, bei dem entsprechende Informationssignale des empfangenen Codesignals mit einem entsprechenden Referenzsignal zeitlich variabel miteinander in Beziehung gesetzt werden, ist an sich allgemein bekannt. Im Rahmen der Erfindung wird es aber nicht dazu verwendet, das gesamte Codesignal zu erkennen. Angesichts des möglichen Umfangs an Referenz-Code-Signalen, die hierfür zur Verfügung gestellt werden müßten, würde dies bei vielen Anwendungen zu einem nicht zu vertretenen Aufwand in der Signalauswertungseinheit führen. Betrachtet man beispielsweise Funk- bzw. Infrarot-Fembedienungen bei Fahrzeugen mit einem Wechselcode, d.h. mit einem sich entsprechend einem Bildungsgesetz bei jeder Betätigung ändernden Codesignal, einem empfängerseitig vorgehaltenen Bestand an mehreren 100 richtigen Codesignalen (vgl. DE 35 36 378 A) sowie die Möglichkeit, Fernbedienungen mit vier voneinander verschiedenen Sendern (Schlüsseln) zu betätigen, so ist das sich daraus ergebende Datenvolumen ohne weiteres erkennbar.

Durch die Erfindung wird das Korrelationsverfahren zur Synchronisierung des Zeittaktes des Empfängers auf die Übertragung verwendet. Anschließend erfolgt ein separates Zuordnen der einzelnen Bits zur "0" oder "1". Diese Auswertung des Codesignals kann in bekannter Weise durch einen Empfänger erfolgen, der entsprechend dem Sendesignal z.B. auf ASK (Amplituden-Shift-Keying) bzw. FSK (Frequenz-Shift-Keying)-Basis arbeitet.

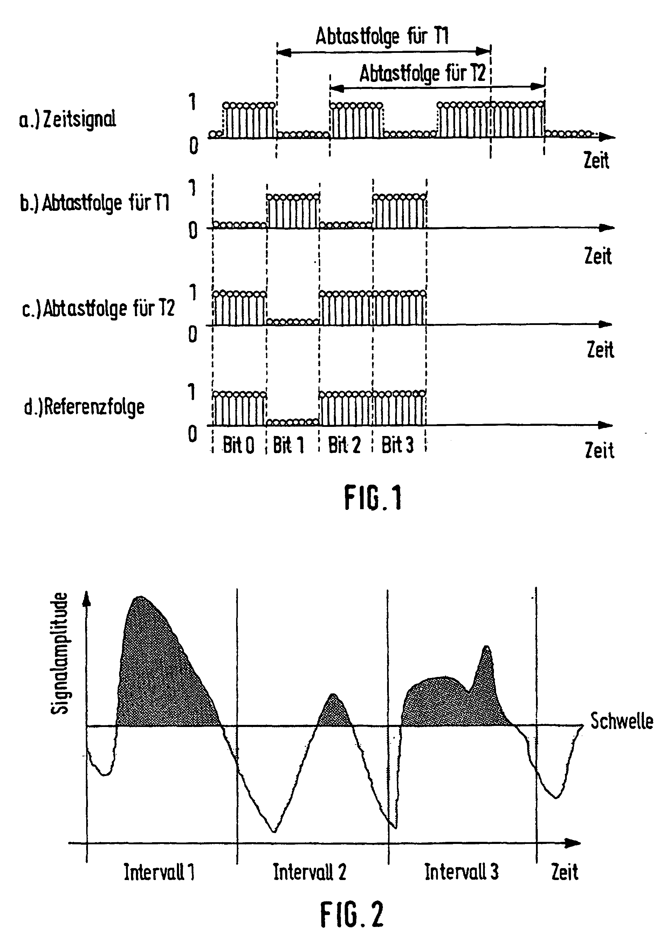

Demgegenüber ergibt sich eine weitere Verbesserung der Signalauswertung beim Einlesen mittels einem Integrieren der Differenz des Empfänger-Eingangssignals und der Empfindlichkeitsschwelle des Empfängers über der Intervallzeitdauer nachfolgend auch Abtastzeit genannt. Der Wert und das Vorzeichen des Integrals am Ende der Intervallzeit liefern einen Maßstab für die enthaltene Information 0" am Ende der Intervallzeit liefern einen Maßstab für die enthaltene Information 0" oder 1" des Intervalls, wie nachfolgend anhand von Fig. 2 erläutert wird. Diese Information liegt auch dann zweifelsfrei vor, wenn das Codesignal im Empfänger gestört ist. Derartige Störungen treten angesichts der zunehmenden Verbreitung von Fernbedienungen immer stärker in Erscheinung. Durch die Erfindung wird es möglich, diese Störungen zu eliminieren.

Anhand der Zeichnung ist die Erfindung weiter erläutert. Es zeigt
- Fig. 1: anhand mehrerer Diagramme a bis d das erfindungsgemäße Korrelationsverfahren zur Bestimmung des Synchronisationsbytes,
- Fig. 2: ein Diagramm zur Erläuterung des Verfahrens der Signalauswertung beim Einlesen bzw. der Abtastung und
- Fig. 3: ein Diagramm entsprechend Fig. 1 zur Erläuterung der Signalauswertung nach erfolgreichem Synchronisieren.

In Fig. 1 ist im Diagramm d das Bitmuster eines angenommenen Synchronisationsbytes gezeigt. Das Byte besteht aus vier Bits 0, 1, 2 und 3 mit dem Inhalt 1011.

Das Diagramm a zeigt das im Empfänger eingehende Zeitsignal. Mit Hilfe eines Korrelationsverfahrens wird nunmehr bestimmt, ob in diesem Zeitsignal das Synchronisationsbyte (d) enthalten ist. Hierzu werden zu unterschiedlichen Zeiten die im Empfänger eingehenden Signale über eine Zeitdauer untersucht, die gleich der der Referenzfolge (vier Bit) ist. Dies ist anhand von zwei Beispielen für unterschiedliche Startzeiten T1 (Diagramm b) und T2 (Diagramm c) gezeigt. Jede der so gebildeten Signalfolgen wird während der Signaldauer mit einer Frequenz abgetastet, die wesentlich größer als die Frequenz der Signalbits ist. Im dargestellten Fall ist die Abtastfrequenz achtmal größer als die Signalfrequenz. Für jeden Zeitpunkt (im vorliegenden Fall insgesamt 32 mal) wird mit Hilfe einer nicht dargestellten Integration mit nachgeschaltetem Schwellwertschalter entschieden, ob eine Überoder Unterschreitung eines gegebenen Schwellwertes vorliegt und dem empfangenen Signal der Wert 1" oder 0" zugeordnet. Die sich daraus ergebende Folge von Abtastwerten ist für die beiden Istfolgen in den Diagrammen b und c gezeigt. Diese Zeitfolge wird mit der Folge von Werten verglichen, die bei Abtastung des erwarteten (und nicht gestörten) Bitmusters erhalten würde. Diese Sollfolge ist identisch mit der im Diagramm d dargestellten Folge von Werten.

Da die Lage des erwarteten Bitmusters für das Synchronisationsbyte im Zeitsignal (a) nicht bekannt ist, wird die bestimmte Ist-Folge mit einer Länge von vier Bit nach jedem Vergleich mit der Soll-Folge um einen Abtastwert weiter verschoben. Dabei wird der Ist-Folge der aktuelle, neue Abtastwert hinzugefügt, während der älteste enthaltene Wert aus ihr entfernt wird. Für diese neue Ist-Folge wird erneut der Vergleich mit der Soll-Folge d durchgeführt. Jeweils acht aufeinanderfolgende Abtastwerte werden mit der entsprechenden Folge von Abtastwerten der Soll-Folge entsprechend den Bits 0, 1, 2 und 3 miteinander verglichen und so die Übereinstimmung zwischen Ist-Folge und Soll-Folge überprüft. Die Übereinstimmung wird hierbei anhand der Häufigkeitsverteilung festgestellt.

Angewandt auf das dargestellte Beispiel ergibt sich für den Abtastzeitpunkt T1 für die Bits 0, 1 und 2 keinerlei Übereinstimmung, während für Bit 3 die volle Zahl von acht Übereinstimmungen festgestellt wird. Bei T2 hingegen findet man für jedes der vier Bits die volle Zahl von Übereinstimmungen. Soll ein Bitmuster als erkannt gelten, so ist es an sich erforderlich, daß, wie im Beispiel bei T2, jedes Bit des Musters für sich als richtig erkannt gelten kann. Im Beispiel ist der Fall eines nicht gestörten Empfangssignals dargestellt, weshalb für die zum Startzeitpunkt T2 gebildete Ist-Folge bei jedem einzelnen Bit die volle Anzahl von Übereinstimmung gefunden wird.

Im allgemeinen Fall genügt es jedoch, wenn ein hinreichend großer Anteil der Abtastwerte für ein Bit den richtigen Wert aufweist. Bei acht Abtastwerten pro Bit sind dies beispielsweise sechs Übereinstimmungen. Es wird also für jeden Abtastzeitpunkt das Maß der Übereinstimmung zwischen dem Bitmuster für das Synchronisationsbyte und dem gerade betrachteten Ausschnitt des Zeitsignals ausgewertet und damit festgestellt, inwieweit sie korreliert sind.

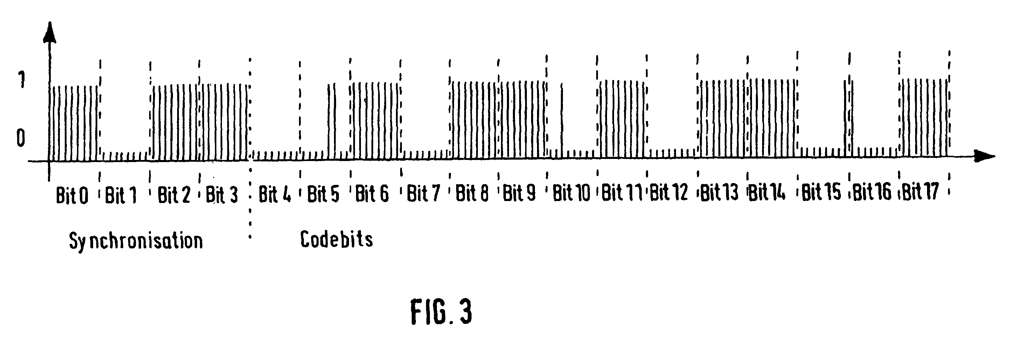

Ist wie hier dargestellt, das Synchronisationsbyte identifiziert und die Übereinstimmung mit dem Soll-Synchronisationsbyte festgestellt, wird das Codesignal ausgewertet. Hierzu wird den nachfolgenden Abtastwerten ein fester Zeitrahmen für die Lage der einzelnen Bits des Codewertes überlagert, dessen Anfang sich aus dem Maximum der Übereinstimmungen des Korrelationsverfahrens für die Synchronisationsbytesuche ergibt. Der Wert der einzelnen Bits des Codewortes wird ebenfalls durch eine Tendenzauswertung der einzelnen Abtastwerte des entsprechenden Bits bestimmt (Fig. 3).

Das in Fig. 2 dargestellte Verlaufsbild für das über die Differenz aus Eingangssignal und Schwellwert gebildete Integral zeigt abhängig von der vorgenommenen Signalauswertung einen Verlauf, der um einen mittleren Wert schwankt. Kleinere positive und negative Abweichungen, aber auch kurzzeitig größere Abweichungen sind auf Störungen des empfangenen Signals zurückzuführen.

In einem Intervall 1, dessen Länge gleich der Bitdauer ist, besitzt das Signal einen überwiegend positiven Verlauf. Bedingt durch die Signalauswertung wird damit dem ersten Bit der Wert "1" zugeordnet.

Im anschließenden Intervall 2 ergibt sich ein deutlich negativer Verlauf des Integrals. Daraus ergibt sich der Wert des zweiten Bits zu "0". Im Intervall 3 verläuft das Integral wiederum im Positiven. Es gibt sich damit die Information "1" und die Signalfolge 1 (Intervall 1) 0 (Intervall 2) 1 (Intervall 3). Durch fortgesetzte Anwendung dieses Verfahrens ergibt sich das in Fig. 3 dargestellte Bitmuster aus 17 Einzelbits.

Die somit vorgenommene Signalauswertung ist weitgehend unempfindlich gegenüber externen Störungen. Sie ermöglicht sowohl eine Erkennung des Synchronisationsbytes mit geringem Aufwand als auch eine Signalauswertung für das anschließende Bitmuster, bei dem Störeinflüsse ebenfalls weitgehend wirkungslos sind.

## Patentansprüche

1. Verfahren zum Empfang eines drahtlos übertragenen Bitmusters mit einem zu Beginn der Übertragung empfangenen Synchronisationsbyte und einem sich daran anschließenden Codesignal als Binärcode,
**dadurch gekennzeichnet, dass** das empfangene Synchronisationsbyte mit einem Referenz-Synchronisationsbyte korreliert wird, dass die Übereinstimmung mit dem Synchronisationsbyte durch dessen zeitlich variable Korrelation festgestellt wird, ***indem das empfangene Synchronisationsbyte mit einer Folge von Referenz-Synchronisationsbytes korreliert wird, die eine gegenüber der Frequenz der Signalbits vielfach größere Abtastfrequenz besitzt,*** und dass daraus der Startpunkt für die Auswertung des Codesignals bestimmt wird.

2. Verfahren nach Anspruch 1, **dadurch gekennzeichnet, daß** das Codesignal anschließend mit einem Referenzsignal für die binäre Information "0" oder "1" in Bezug gesetzt wird.

3. Verfahren nach Anspruch 2, **dadurch gekennzeichnet, daß** der Bezug durch Differenzbildung des Codesignals und des Referenzsignals sowie durch zeitliche Integration des sich daraus ergebenden Differenzsignals hergestellt wird.

4. Verfahren nach Anspruch 3, **dadurch gekennzeichnet, daß** das Integral vorzeichenmäßig bewertet und entsprechend dem Vorzeichen und dem Integralwert die Information "0" und "1" aus dem Codesignal gewonnen wird.

## Claims

1. A method for receiving a wirelessly transmitted bit pattern comprising a synchronisation byte received at the beginning of the transmission and a code signal subsequent thereto as a binary code, **characterised in that** the received synchronisation byte is correlated with a reference synchronisation byte, **in that** conformity with the synchronisation byte is established by its time-variable correlation, **in that** the received synchronisation byte is correlated with a sequence of reference synchronisation bytes which has a many times greater scanning frequency than the frequency of the signal bits, and **in that** the starting point for the evaluation of the code signal is determined therefrom.

2. A method according to claim 1, **characterised in that** the code signal is then set with reference to a reference signal for the binary information "0" or "1 ".

3. A method according to claim 2, **characterised in that** the reference is produced by formation of the difference between the code signal and the reference signal and by time integration of the differential signal produced therefrom.

4. A method according to claim 3, **characterised in that** the integral is evaluated in terms of sign and the information "0" and "1" is obtained from the code signal in accordance with the sign and the integral value.

## Revendications

1. Procédé pour recevoir une configuration de bits transmise sans fil avec un octet de synchronisation reçu au début de la transmission et un signal de code en code binaire suivant celle-ci,
**caractérisé en ce que**
l'octet de synchronisation reçu est corrélé avec un octet de synchronisation de référence, on constate la concordance avec l'octet de synchronisation par sa corrélation variable avec le temps, en corrélant l'octet de synchronisation reçu avec une séquence d'octets de synchronisation de référence qui possède une fréquence de balayage beaucoup plus grande que la fréquence des bits de signal, et on en déduit le point de départ de l'exploitation du signal de code.

2. Procédé selon la revendication 1,
**caractérisé en ce que**
le signal de code est ensuite mis en rapport avec un signal de référence pour l'information binaire "0" ou "1".

3. Procédé selon la revendication 2,
**caractérisé en ce que**
le rapport est effectué en formant la différence entre le signal de code et le signal de référence ainsi que par une intégration par rapport au temps du signal de différence qui en résulte.

4. Procédé selon la revendication 3,
**caractérisé en ce que**
l'intégrale est exploitée en fonction du signe et l'information "0" et "1" est obtenue à partir du signal de code en fonction du signe et de la valeur de l'intégrale.
